(19) Europäisches Patentamt
European Patent Office
Office européen des brevets

(11) Numéro de publication: **0 097 568**
**A1**

(12) # DEMANDE DE BREVET EUROPEEN

(21) Numéro de dépôt: **83401167.8**

(22) Date de dépôt: **08.06.83**

(51) Int. Cl.$^3$: **H 01 M 4/58**

(30) Priorité: **22.06.82 FR 8210860**

(43) Date de publication de la demande:
**04.01.84 Bulletin 84/1**

(84) Etats contractants désignés:
**DE GB IT NL**

(71) Demandeur: **Etablissement Public dit: CENTRE NATIONAL DE LA RECHERCHE SCIENTIFIQUE (CNRS)**
**15, Quai Anatole France**
**F-75007 Paris(FR)**

(72) Inventeur: **Baron, Francis**
**Cité Mussonville Bât. E - Appt 561**
**F-33130 Begles(FR)**

(72) Inventeur: **Flandrois, Serge**
**29, rue P. de Coubertin**
**F-33600 Pessac(FR)**

(72) Inventeur: **Pacault, Adolphe**
**C.R.P.P. Domaine Universitaire**
**F-33405 Talence(FR)**

(74) Mandataire: **Ahner, Francis et al,**
**CABINET REGIMBEAU 26, avenue Kléber**
**F-75116 Paris(FR)**

(54) **Matériau anodique constitué par des composés d'insertion graphite-chlorure métallique, leur procédé de préparation ainsi que les accumulateurs électrochimiques utilisant un tel matériau anodique.**

(57) La présente invention concerne de nouveaux matériaux anodiques constitués par des composés d'insertion du graphite avec des chlorures métalliques, leur procédé de préparation, ainsi que les accumulateurs électrochimiques utilisant de tels matériaux en tant qu'anode.

Le matériau anodique selon l'invention se caractérise en ce qu'il est constitué par un composé d'insertion du graphite avec un chlorure d'un métal présentant un potentiel d'oxydo-réduction appartenant au moins sensiblement au domaine tension/pH de stabilité de l'eau.

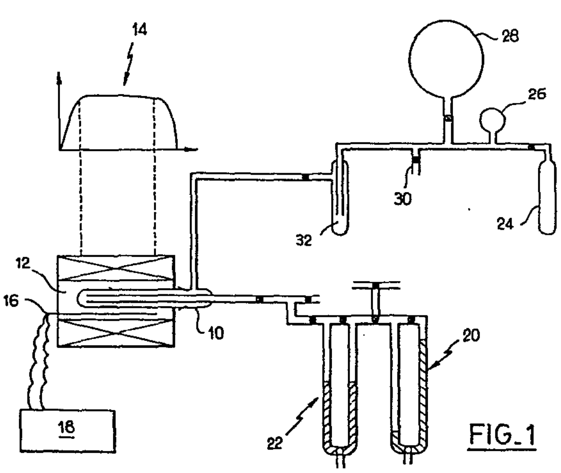

FIG_1

EP 0 097 568 A1

# MATERIAU ANODIQUE CONSTITUE PAR DES COMPOSES D'INSERTION GRAPHITE-CHLORURE METALLIQUE, LEUR PROCEDE DE PREPARATION AINSI QUE LES ACCUMULATEURS ELECTROCHIMIQUES UTILISANT UN TEL MATERIAU ANODIQUE

La présente invention concerne de nouveaux matériaux anodiques constitués par des composés d'insertion du graphite avec des chlorures métalliques, leur procédé de préparation, ainsi que les accumulateurs électrochimiques utilisant de tels matériaux en tant qu'anode.

Le matériau anodique selon la présente invention est constitué par un composé d'insertion du graphite avec un chlorure d'un métal présentant un potentiel d'oxydo-réduction appartenant au moins sensiblement au domaine tension/pH de stabilité de l'eau. Entrent en particulier dans le cadre de la présente invention les matériaux anodiques constitués par un composé d'insertion du graphite avec un chlorure d'un métal choisi parmi les métaux suivants : Ti, Fe, Cu, Ge, Nb, Tc, Cd, In, Sn, Sb, W, Re et Pb.

A titre d'exemples particuliers de tels composés d'insertion, on mentionnera les composés d'insertion répondant aux formules :

$C_{6,6-7}\ Cd\ Cl_2$

$C_{6,3-7}\ Fe\ Cl_3$

$C_{4,9-5}\ Cu\ Cl_2$

$C_{28}\ W\ Cl_6$.

La présente invention concerne également un procédé de préparation des composés d'insertion du graphite avec les chlorures métalliques précités, qui consiste à chauffer un mélange pulvérulent de graphite et de chlorure métallique anhydre sous atmosphère de chlore, à une température comprise entre environ 300 et environ 600°C.

De façon avantageuse, le mélange pulvérulent de départ contient le chlorure métallique en excès par rapport au graphite.

La présente invention se rapporte enfin aux accumulateurs électrochimiques contenant une anode précisément constituée par un composé d'insertion du graphite avec un chlorure métallique tel que défini précédemment. Il s'agit essentiellement d'accumulateurs électrochimiques dont l'électrolyte est de nature alcaline et dont la cathode peut être par ailleurs constituée indifféremment par un métal tel que Mn et Ni, par un mélange graphite-$MnO_2$ ou graphite-$Ni(OH)_2$, ou encore par un composé d'insertion du graphite avec un chlorure de manganèse ou de nickel.

D'autres caractéristiques et avantages de la présente invention apparaîtront à la lecture de la description détaillée faite ci-après, notamment en référence aux dessins annexés, sur lesquels :

- la figure 1 représente le schéma d'un appareillage permettant la mise en oeuvre du procédé de préparation des composés d'insertion selon l'invention ;
- la figure 2 représente le schéma d'une cellule de polarisation utilisée pour la réalisation de divers tests électrochimiques portant sur les composés d'insertion de l'invention ;
- la figure 3 représente les courbes de charge-décharge de l'accumulateur $C_{5,6}$ Mn $Cl_{2,3}$//KOH(10N)//$C_{6,6}$Fe $Cl_3$;
- la figure 4 représente les courbes de charge-décharge de l'accumulateur $C_{5,6}$ Mn $Cl_{2,3}$//KOH(10N)//$C_5$ Cu $Cl_2$;
- la figure 5 représente les courbes de charge-décharge de l'accumulateur $C_{11,3}$Ni $Cl_{2,13}$// KOH (10N)//$C_{6,6}$Fe $Cl_3$;
- la figure 6 représente les courbes de charge-décharge de l'accumulateur $C_{11,3}$ Ni $Cl_{2,13}$//KOH (10N)//$C_5$ Cu $Cl_2$;

- la figure 7 représente les courbes de charge-décharge de l'accumulateur $C_{5,6}$ Mn $Cl_{2,4}$//KOH (10N)//$C_7$ Cd $Cl_2$, et

- la figure 8 représente les courbes de charge-décharge de l'accumulateur $C_{11,3}$ Ni $Cl_{2,13}$//KOH (10N)//$C_7$ Cd $Cl_2$.

Les composés d'insertion du graphite avec des chlorures métalliques selon la présente invention peuvent avantageusement être obtenus par chauffage dans un tube de quartz couplé à une source de chlore avec interposition d'un dispositif manométrique permettant en permanence de mesurer la pression de chlore durant la réaction. La figure 1 illustre schématiquement un exemple de réalisation d'un tel appareillage permettant la mise en oeuvre du procédé selon la présente invention. Ce dispositif comporte un tube réacteur en quartz 10 placé dans un four tubulaire 12 dont le gradient de température est contrôlé tel que schématisé en 14. La température du four est mesurée par un dispositif approprié, par exemple par un thermocouple Chromel-Alumel 16 et se trouve enregistrée sur un dispositif servo-traceur "Servotrace" 18 qui sert également de base de temps. Le réacteur tubulaire en quartz 10 est en outre couplé à un manomètre à mercure 20 protégé par un autre manomètre à acide sulfurique 22, permettant d'effectuer des mesures de pression au cours du déroulement de la réaction d'insertion. La source de chlore alimentant le réacteur tubulaire en quartz 10 peut par exemple être constituée par une bouteille de chlore 24 couplée au réacteur par un conduit d'alimentation incorporant respectivement un ballon de sécurité 26, une réserve de chlore 28, une prise de vide 30, et un flacon desséchant 32. Des essais systématiques effectués sur un tel type d'installation ont démontré qu'en utilisant du graphite de Madagascar se présentant sous la forme de paillettes ayant un diamètre moyen de particules inférieur à environ 1 mm, la réaction

d'insertion était achevée en quelques heures, à une température sensiblement comprise entre 300 et 600°C et sous une pression de chlore environ égale à 700 mm de mercure.

On indiquera ci-après à titre de simple illustration un exemple particulier de préparation d'un composé d'insertion de graphite et de chlorure métallique selon la présente invention.

On mélange tout d'abord 1 g de graphite de Madagascar en paillettes (Ø < 1 mm) à 4 g de chlorure de cuivre ($CuCl_2$) anhydre pulvérulent. Ce mélange est alors placé dans le réacteur tubulaire en quartz et chauffé tout d'abord sous vide progressivement jusqu'à une température environ égale à 560 °C. Après stabilisation de la température du four, le chlore gazeux est introduit sous une pression environ égale à 700 mm de mercure. La durée de réaction d'insertion peut varier entre quelques heures et quelques jours. Dans les conditions réactionnelles précédemment définies on observe que l'insertion du chlorure de cuivre commence aussitôt le chlore gazeux introduit et se trouve complètement achevée au bout de 2 jours. Après refroidissement à la température ambiante, on récupère le composé d'insertion ainsi obtenu qui est alors lavé à l'acide chlorhydrique dilué et à l'eau pour éliminer le chlorure métallique en excès, puis le produit final est séché à l'étuve. Dans les conditions opératoires, précédemment définies, on obtient 3,2 g de composé d'insertion dont la formule déterminée par l'analyse chimique est $C_5\,Cu\,Cl_2$.

En opérant de manière analogue, mais en utilisant $Cd\,Cl_2$, $Fe\,Cl_3$ et $W\,Cl_6$, on obtient respectivement des composés d'insertion dont la formule déterminée par l'analyse chimique est voisine de formule suivante :

$$C_7\,Cd\,Cl_2\ ;\ C_7\,Fe\,Cl_3\ ;\ C_{28}\,W\,Cl_6.$$

Ces différents composés d'insertion ont été soumis à un certain nombre de tests électrochimiques conduits à l'aide d'une cellule de polarisation illustrée à la figure 2. Le corps 34 de cette cellule est par exemple avantageusement réalisé en plexiglass, matériau qui résiste bien aux solutions concentrées de potasse. La partie basse de cette cellule comprend un support de l'électrode du composé d'insertion qui se présente sous la forme d'une feuille de platine 36 sur laquelle repose le composé d'insertion 38 qui se trouve coiffé par une pastille de verre frittée 40 maintenue en place à l'aide d'anneaux de serrage 42. La cellule comporte également une contre-électrode 44, par exemple réalisée en platine, et l'électrolyte 46 baignant ces deux électrodes 40,44 est par exemple constitué par une solution aqueuse de potasse 10 N. Une électrode de référence Hg/HgO 48 permet d'effectuer les mesures de potentiel. On notera enfin que le circuit de polarisation comprend une alimentation stabilisée en courant ainsi qu'un milliampèremètre et que l'ensemble des fils de connexion 50 des électrodes est réalisé en platine. Cette cellule de polarisation a été couplée à un enregistreur qui permet de suivre l'évolution du potentiel en fonction du temps.

Dans la pratique, il a été observé que le chlorure métallique inséré dans le graphite devait tout d'abord être réduit pour fonctionner en tant qu'anode. Des essais effectués dans la cellule de polarisation utilisée pour $Mn\ Cl_2$ ont montré qu'une réduction est obtenue en électrolyse basique avec $Cd\ Cl_2$, $Fe\ Cl_3$, $Cu\ Cl_2$ et $W\ Cl_6$. L'oxydation est ensuite réalisée, lors d'un fonctionnement anodique, avec des paliers

de potentiel ayant les valeurs suivantes par rapport à l'électrode de référence Hg/HgO dans un électrolyte constitué par de la potasse 10 N :

$C_7$ Cd $Cl_2$ = - 0,95 Volt

$C_7$ Fe $Cl_3$ = - 0,8 Volt

$C_5$ Cu $Cl_2$ = - 0,2 Volt

$C_{28}$ W $Cl_6$ = - 0,2 Volt.

En outre, Cu $Cl_2$ peut subir une oxydo-réduction en milieu acide. Le potentiel du palier obtenu dans $H_2SO_4$ (0,05 N) est de - 0,3 Volt par rapport à l'électrode de référence Hg/$HgSO_4$.

Ce type d'anode fonctionne parfaitement dans des batteries alcalines du type Cd-Ni, Fe-Ni, ou à cathode au bioxyde de manganèse. Le composé graphite-Cu $Cl_2$ peut également être associé à une cathode de bioxyde de manganèse dans une batterie acide. Il convient ici de préciser que le principal intérêt de ces anodes est d'assurer la protection de la matière active par le réseau graphitique contre la dilution dans l'électrolyte ou contre les réactions parasites.

Un certain nombre d'accumulateurs électrochimiques de ce type ont été testés en utilisant comme matériau cathodique d'autres composés d'insertion. Ces essais se sont révélés positifs.

L'intérêt d'utiliser également à la cathode un composé d'insertion avec le chlorure de nickel et avec le chlorure de manganèse résulte du fait que de tels composés d'insertion présentent une très bonne conductibilité électronique et ionique et du fait que le réseau graphitique joue un rôle protecteur. Dans le cas particulier de l'utilisation d'un composé d'insertion du graphite avec le chlorure de manganèse d'autres avantages s'y ajoutent, en particulier un potentiel élevé, la réversibilité, etc.

L'examen des figures 3 à 8 annexées permet de déterminer les diverses forces électromotrices des différents accumulateurs électrochimiques ainsi réalisés.

. Figure 3 : $C_{5,6}$ Mn $Cl_{2,3}$// KOH (10N)// $C_{6,6}$ Fe $Cl_3$
f.e.m. environ 1,6 Volt

. Figure 4 : $C_{5,6}$ Mn $Cl_{2,3}$// KOH (10N)// $C_5$ Cu $Cl_2$
f.e.m. environ 1,7 Volt

. Figure 5 : $C_{11,3}$ Ni $Cl_{2,13}$// KOH (10N)// $C_{6,6}$ Fe $Cl_3$
f.e.m. environ 1,4 Volt

. Figure 6 : $C_{11,3}$ Ni $Cl_{2,13}$// KOH (10N)// $C_5$ Cu $Cl_2$
f.e.m. environ 1,5 Volt

. Figure 7 : $C_{5,6}$ Mn $Cl_{2,4}$// KOH (10N)// $C_7$ Cd $Cl_2$
f.e.m. environ 1,4 Volt

. Figure 8 : $C_{4,3}$ Ni $Cl_{2,13}$// KOH (10N)// $C_7$ Cd $Cl_2$
f.e.m. environ 1,4 Volt.

Bien entendu, la présente invention ne saurait être limitée aux modes de réalisation particuliers décrits précédemment, mais il est parfaitement possible, sans pour autant sortir du cadre de la présente invention d'en imaginer un certain nombre de variantes d'exécution.

REVENDICATIONS

1/ Matériau anodique pour accumulateur électrochimique, caractérisé en ce qu'il est constitué par un composé d'insertion du graphite avec un chlorure d'un métal présentant un potentiel d'oxydo-réduction appartenant au moins sensiblement au domaine tension/pH de stabilité de l'eau.

2/ Matériau anodique caractérisé en ce qu'il est constitué par un composé d'insertion du graphite avec un chlorure d'un métal choisi parmi les métaux suivants : Ti, Fe, Cu, Ge, Nb, Tc, Cd, In, Sn, Sb, W, Re et Pb.

3/ Matériau anodique selon l'une des revendications 1 et 2, caractérisé en ce qu'il est choisi parmi les composés d'insertion de formule :

$C_{6,6-7}\ Cd\ Cl_2$

$C_{6,3-7}\ Fe\ Cl_3$

$C_{4,9-5}\ Cu\ Cl_2$

$C_{28}\ W\ Cl_6$.

4/ Procédé de préparation d'un composé d'insertion selon l'une des revendications 1 à 3, caractérisé en ce que l'on chauffe, à une température comprise entre environ 300 et environ 600°C, un mélange pulvérulent de graphite et de chlorure métallique sous atmosphère de chlore.

5/ Procédé selon la revendication 4, caractérisé en ce que le chlorure métallique est utilisé en excès par rapport au graphite.

6/ Procédé selon l'une des revendications 4 et 5, caractérisé en ce que le composé d'insertion obtenu est lavé à l'acide chlorhydrique dilué et à l'eau pour éliminer le chlorure métallique en excès, puis est séché.

7/ Accumulateur électrochimique, caractérisé en ce qu'il comprend une anode constituée par un composé d'insertion selon l'une des revendications 1 à 3.

8/ Accumulateur électrochimique selon la revendication 7, caractérisé en ce que la cathode est réalisée en un métal tel que Mn et Ni, en un mélange graphite-$MnO_2$ ou graphite-$Ni(OH)_2$, ou encore en un composé d'insertion du graphite avec un chlorure de manganèse ou de nickel, et en ce que l'électrolyte est de type alcalin, tel que la potasse.

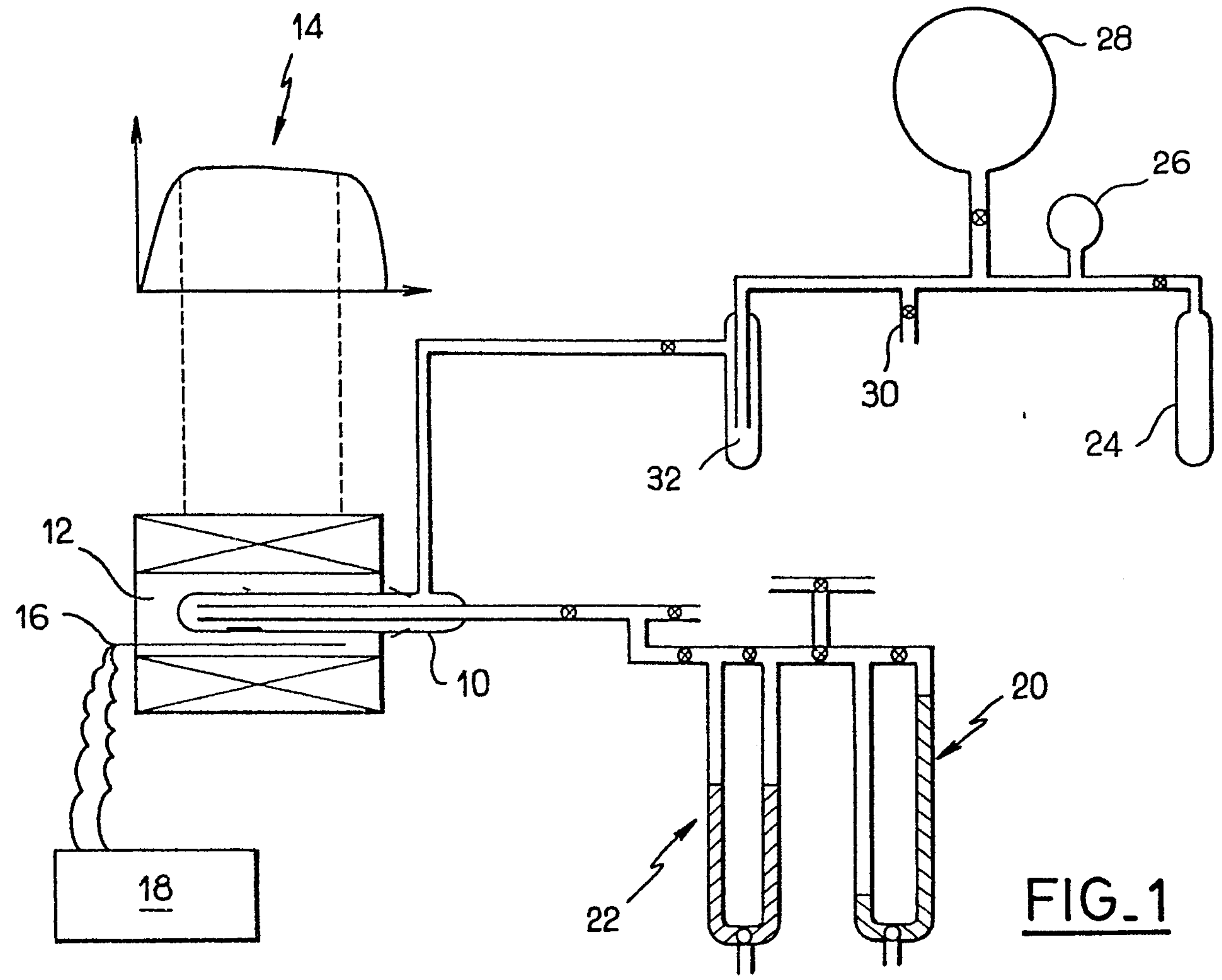


FIG_1

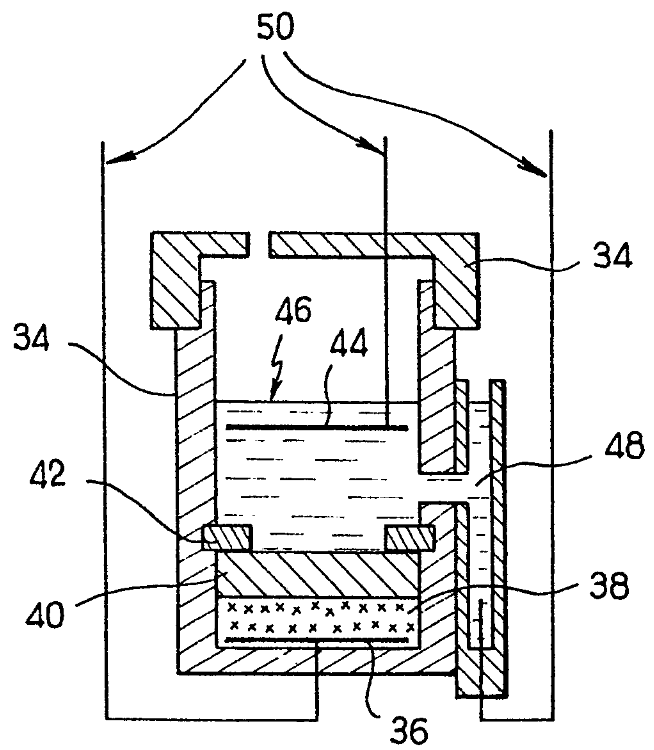


FIG_2

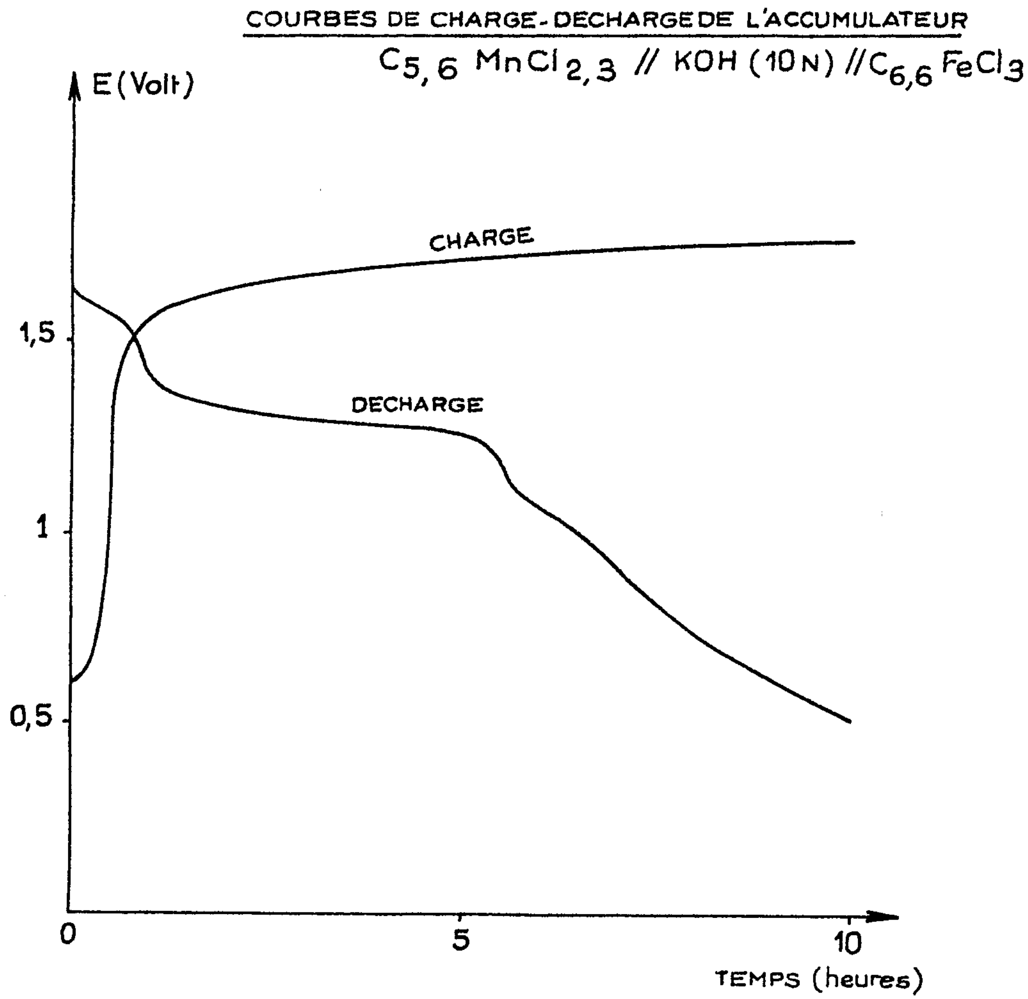
COURBES DE CHARGE-DECHARGE DE L'ACCUMULATEUR
$C_{5,6}\ MnCl_{2,3}$ // KOH (10 N) // $C_{6,6}\ FeCl_3$
E (Volt)
1,5
1
0,5
CHARGE
DECHARGE
0
5
10
TEMPS (heures)

FIG_3

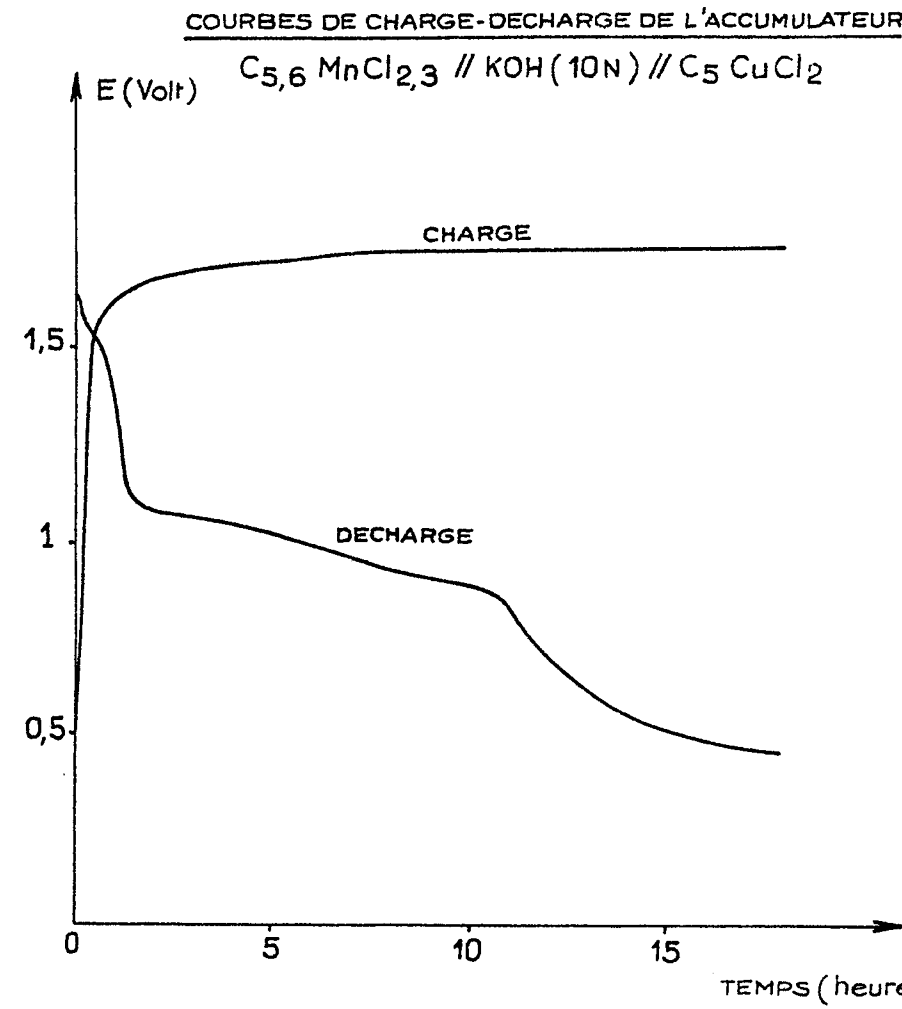
COURBES DE CHARGE-DECHARGE DE L'ACCUMULATEUR
$C_{5,6}\ MnCl_{2,3}$ // KOH (10 N) // $C_5\ CuCl_2$
E (Volt)
1,5
1
0,5
CHARGE
DECHARGE
0
5
10
15
TEMPS (heures)

FIG_4

COURBES DE CHARGE - DECHARGE DE L'ACCUMULATEUR

$C_{11,3}\,NiCl_{2,13}$ // KOH (10N) // $C_{6,6}\,FeCl_3$

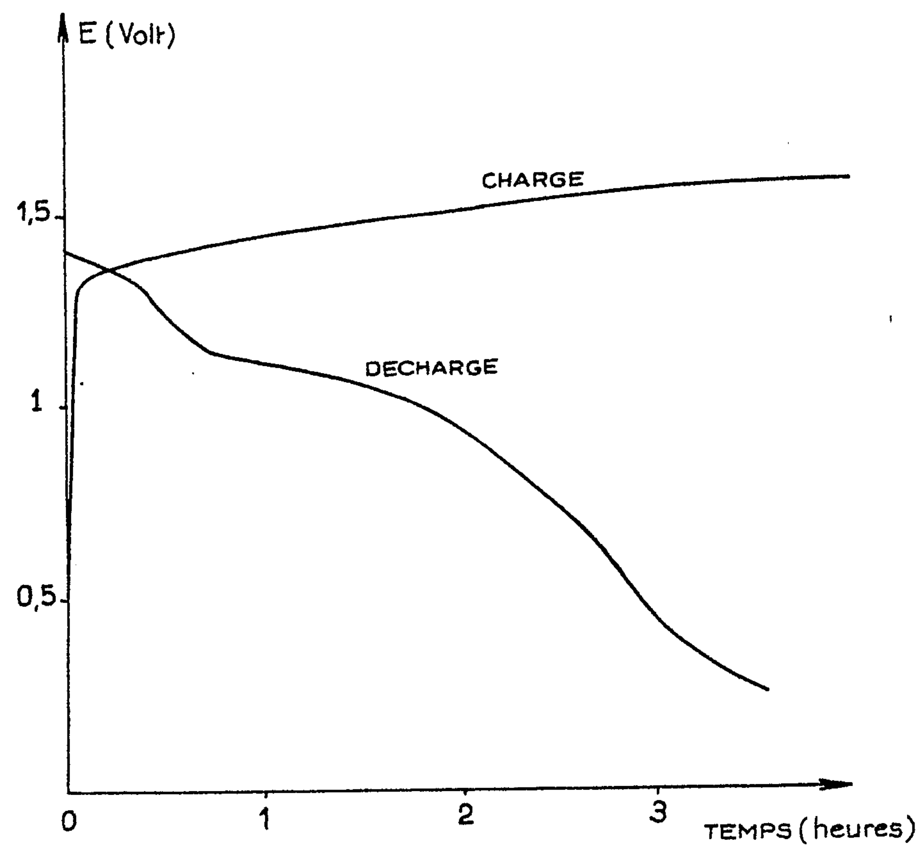


FIG_5

COURBES DE CHARGE-DECHARGE DE L'ACCUMULATEUR

$C_{11,3}\,NiCl_{2,13}$ // KOH (10N) // $C_5\,CuCl_2$

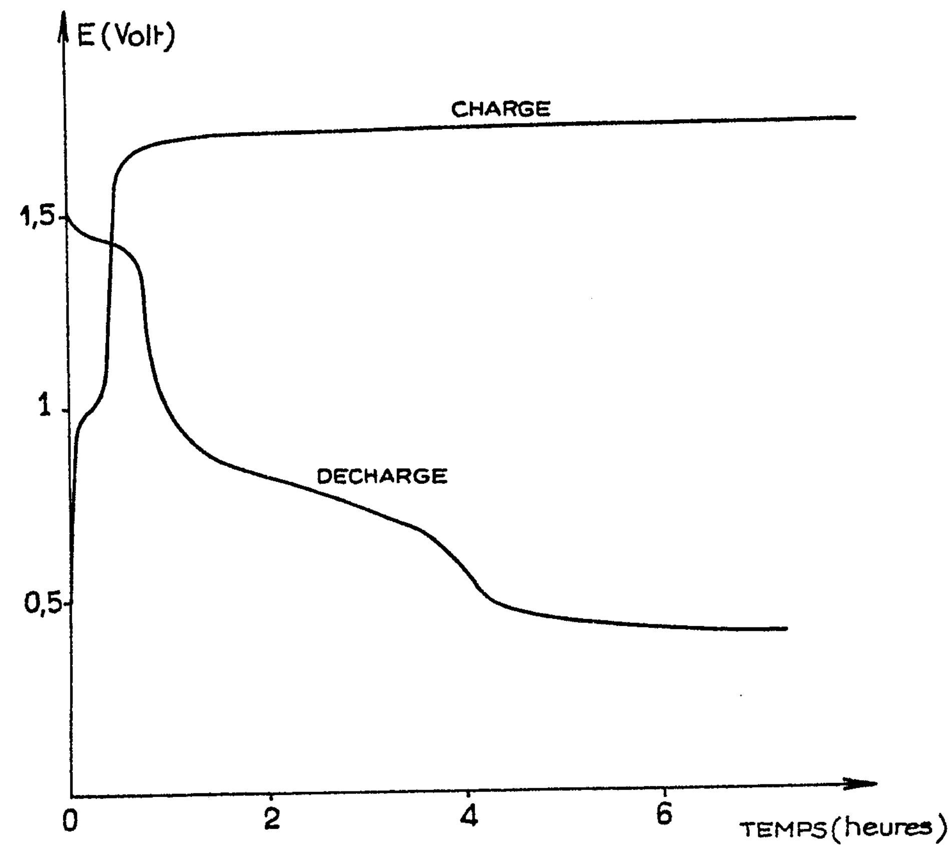


FIG_6

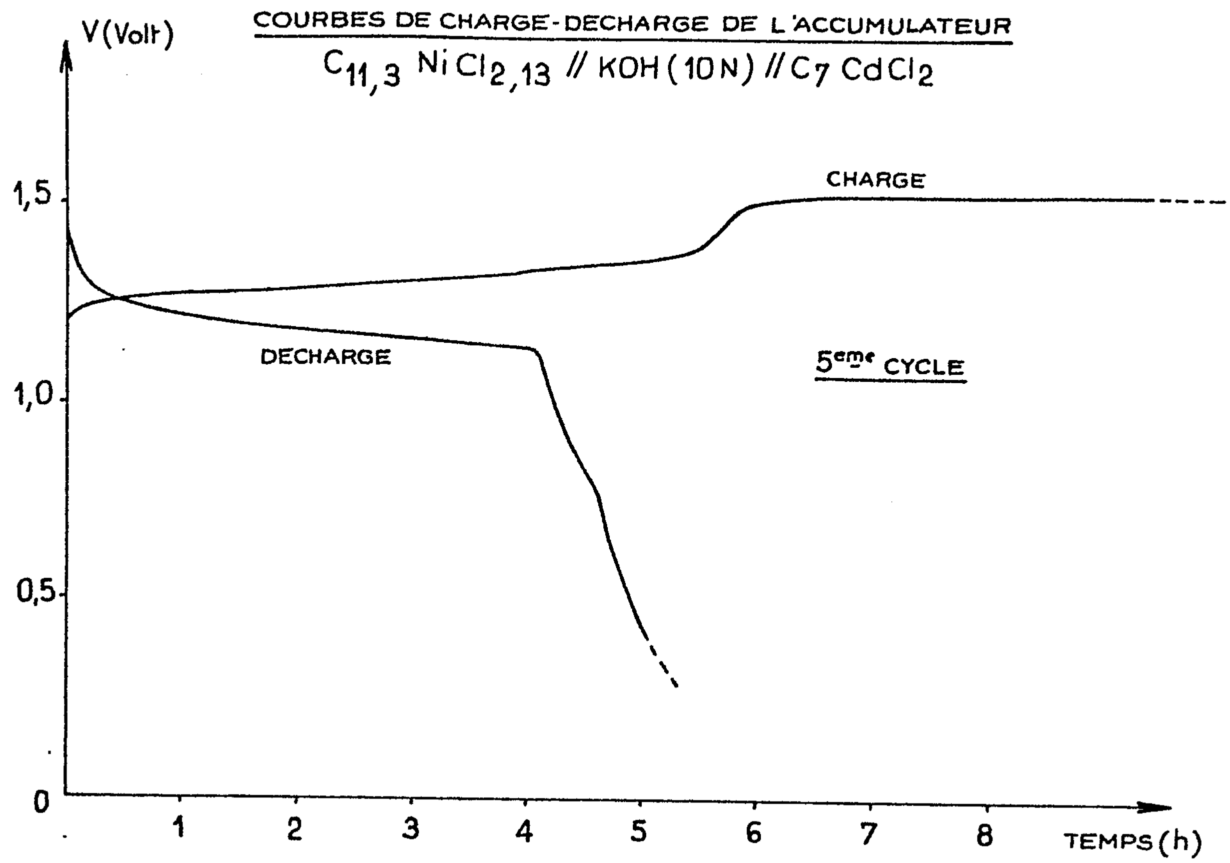
V(Volt)
COURBES DE CHARGE-DECHARGE DE L'ACCUMULATEUR
$C_{11,3}$ $NiCl_{2,13}$ // KOH (10N) // $C_7$ $CdCl_2$
1,5
1,0
0,5
0
CHARGE
DECHARGE
5ème CYCLE
1
2
3
4
5
6
7
8
TEMPS(h)

FIG_7

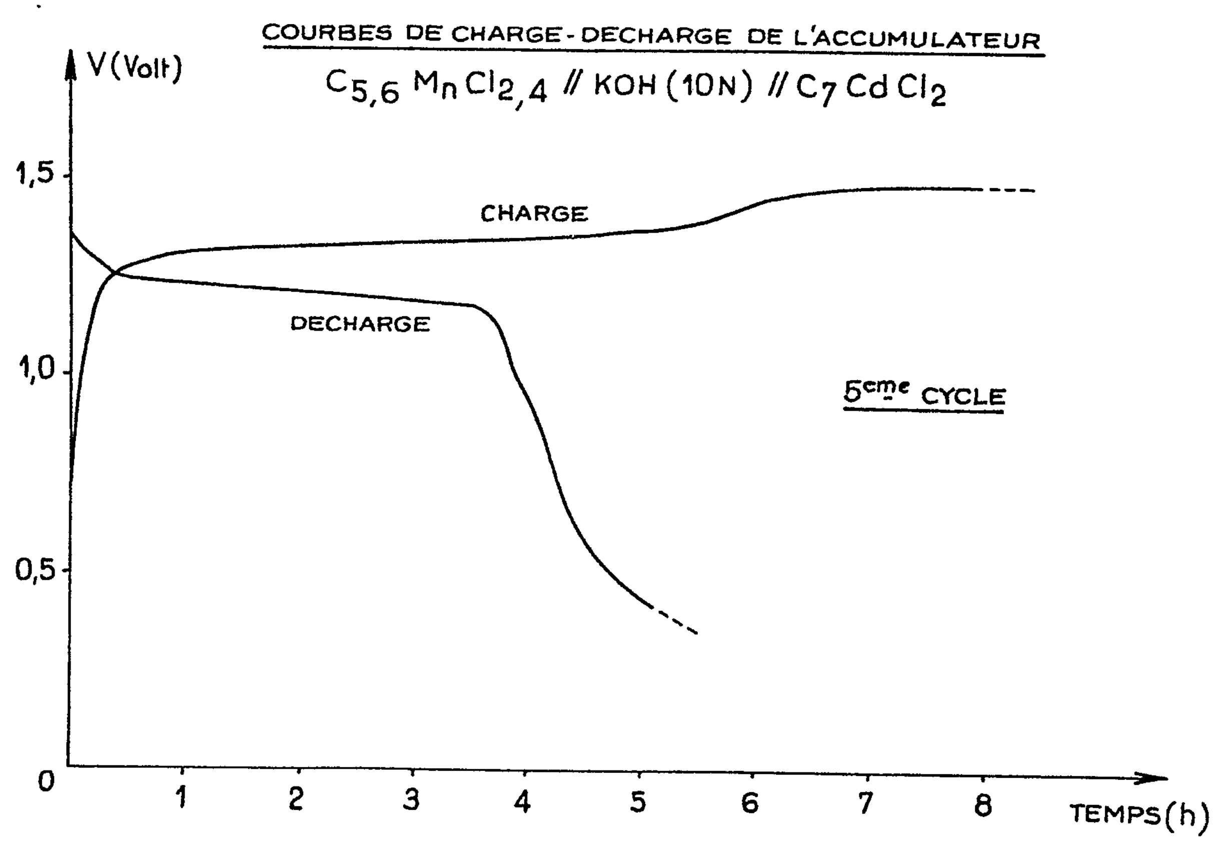
COURBES DE CHARGE-DECHARGE DE L'ACCUMULATEUR
V(Volt)
$C_{5,6}$ $MnCl_{2,4}$ // KOH (10N) // $C_7$ $CdCl_2$
1,5
1,0
0,5
0
CHARGE
DECHARGE
5ème CYCLE
1
2
3
4
5
6
7
8
TEMPS(h)

FIG_8

Office européen des brevets

# RAPPORT DE RECHERCHE EUROPEENNE

0097568

Numéro de la demande

EP 83 40 1167

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 100 192 (KALI-CHEMIE A.G.)<br>--- | | H 01 M 4/58 |
| A | CHEMICAL ABSTRACTS, vol. 94, no. 13, juin 1981, page 527, no. 216434h, Columbus, Ohio, USA S. FLANDROIS et al.: "Intercalation compounds of graphite with nickel chloride as cathode material for alkaline batteries" & SYNTH. MET. 1981, 3(3-4), 195-200<br>--- | | |
| A | CHEMICAL ABSTRACTS, vol. 83, no. 12, 22 septembre 1975, page 514, no. 105332b, Columbus, Ohio, USA K. KINOSHITA: "Electrochemical stability of ferric chloride intercalated graphite" & CARBON 1974, 12(6), 686-689<br>----- | | DOMAINES TECHNIQUES RECHERCHES (Int. Cl. 3)<br>H 01 M 4/58<br>H 01 M 4/36<br>H 01 M 10/36<br>H 01 M 10/24 |

Le présent rapport de recherche a été établi pour toutes les revendications

| Lieu de la recherche | Date d'achèvement de la recherche | Examinateur |
|---|---|---|
| LA HAYE | 08-09-1983 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant